# EUROPÄISCHE PATENTSCHRIFT

(11) **EP 0 872 375 B1**
(45) Veröffentlichungstag und Bekanntmachung des Hinweises auf die Patenterteilung: **02.05.2003**
(21) Anmeldenummer: 98102042.3
(22) Anmeldetag: 06.02.1998
(51) Int. Cl.: B60N 2/20, B60N 2/12

(54) **Neigungseinstellbeschlag mit Freischwenkeinrichtung für Rückenlehnen von Kraftfahrzeugsitzen**
Inclination-adjusting fitting with tilting device for backrests of automotive vehicle seats
Ferrure de réglage d'inclinaison à dispositif de rabattement pour dossiers de sièges de véhicules automobiles

(30) Priorität: 16.04.1997 DE 19715764
(43) Veröffentlichungstag der Anmeldung: 21.10.1998
(73) Patentinhaber: Keiper GmbH & Co., 42855 Remscheid (DE)
(72) Erfinder: Thiel, Peter, Ing., 42899 Remscheid (DE); Pfeil, Franz Josef, Dipl.-Ing., 53859 Niederkassel (DE); Lihs, Siegfried, 42859 Remscheid (DE)
(74) Vertreter: Mentzel, Norbert, Dipl.-Phys.

(56) Entgegenhaltungen:
- EP-A- 0 373 081
- DE-A- 3 923 966
- FR-A- 1 584 436
- FR-A- 2 391 873

## Beschreibung

Die Erfindung betrifft einen Neigungseinstellbeschlag mit Freischwenkeinrichtung für Rückenlehnen von Sitzen, insbesondere Kraftfahrzeugsitzen, bei dem ein lehnenfester, einstellbarer Beschlagteil über eine Ver- und Feststelleinrichtung mit einem sitzteilfesten Beschlagteil verbunden ist, wobei die Ver- und Feststelleinrichtung eine entsprechend der gewünschten Lehnenneigung mittels einer Stellwelle verstellbare Scheibe umfaßt, die zur Bildung der Freischwenkeinrichtung an ihrem Außenumfang ein Zahnsegment aufweist, in welches eine am lehnenfesten Beschlagteil gelagerte Sperrklinke eingreift, die mit einem im Freigabesinn betätigbaren und im Sperrsinn selbst rückstellenden Steuerhebel im Eingriff ist.

Bei einem aus der gattungsgemäßen DE 39 23 966 A 1 ersichtlichen Neigungseinstellbeschlag der eingangs genannten Art weist der Steuerhebel eine drei Abschnitte umfassende Steuerkurve auf, die an Zapfen der Sperrklinke angreift, um diese in eine Freigabelage gegenüber dem Zahnsegment der verstellbaren Scheibe zu überführen oder aber in die Sperrlage mit dem Zahnsegment zurückzuschwenken. Dabei ist die Sperrklinke dieser vorbekannten Lösung begrenzt ausweichbar am lehnenfesten Beschlagteil gelagert, um die verstellbare Scheibe an weiteren Umfangsbereichen des lehnenfesten Beschlagteiles spielfrei zur Anlage zu bringen. Bei diesem vorbekannten Neigungseinstellbeschlag ist es jedoch zur Besteigung des Fonds zweitüriger Personenkraftwagen lediglich möglich, die Rückenlehne vorzuschwenken, was allein in vielen Fällen keinen bequemen Zugang zum Fond erlaubt.

Aus diesem Grund ist bereits gemäß der DE 44 23 634 A 1 ein Gelenkbeschlag vorgeschlagen worden, der in Verbindung mit einer eine Positioniereinrichtung aufweisenden Verriegelungseinrichtung gekuppelt ist, so dass mit dem Vorschwenken der Rückenlehne auch der gesamte Sitz in einer Schienenanordnung vorgeschoben wird, um einen bequemeren Zugang zum Fond des Kraftfahrzeuges zu ermöglichen. Bei dieser bekannten Lösung kann zwar immer die zuvor eingestellte Sitzlängslage des Sitzes beim Rückschwenken der Rückenlehne wieder aufgefunden werden, jedoch sind infolge der Rückkopplung zum Zwecke des Rückschwenkens der Rückenlehne erst nach Wiederauffindung der zuvor eingestellten Sitzposition eine Vielzahl von miteinander in Wirkverbindung bringbaren Bauelementen erforderlich. In vielen Fällen mag es genügen, dass mit dem Vorschwenken der Rückenlehne gleichzeitig ein Vorschieben des Sitzes möglich ist, während eine exakte Längslagenanpassung an die Bedürfnisse des Sitzbenutzers diesem überlassen wird, wenn die zuvor eingestellte Neigungslage der Rückenlehne wieder erreicht ist.

Aufgabe der Erfindung ist es, einen Neigungseinstellbeschlag mit Freischwenkeinrichtung so auszubilden, dass nach dem Freischwenken der Rückenlehne ein Vorschieben des gesamten Sitzes mit einfachen Mitteln möglich ist.

Diese Aufgabe ist erfindungsgemäß dadurch gelöst, dass der Steuerhebel mit einem Klinkenhebel gekuppelt ist, der beim Freischwenken des lehnenfesten Beschlagteiles an einem an der verstellbaren Scheibe gelagerten Auslösehebel im Sinne der Entriegelung einer zwischen Sitzteil und Fahrzeugboden angeordneten Längslagenstelleinrichtung angreift. Der bekanntermaßen durch ein Federglied selbstrückstellende Steuerhebel sichert die Sperrlage zwischen Sperrklinke und verstellbarer Scheibe, so dass der lehnenfeste Beschlagteil im Verhältnis zum sitzteilfesten Beschlagteil bei in Eingriffsfunktion befindlicher Sperrklinke unverrückbar gehaltert ist. Bei einer Lösung der Sperrklinke durch den Steuerhebel, indem dieser einen Betätigungsarm der Sperrklinke ergreift, läßt sich über den mit dem Steuerhebel gekuppelten Klinkenhebel ein am Beschlag drehbar gelagerter Betätigungsring erfassen und derart verdrehen, dass über diesen Betätigungsring auch eine Entriegelung der Längslagenstelleinrichtung ermöglicht wird, um zusammen mit dem Vorschwenken der Rückenlehne auch den gesamten Sitz vorschieben zu können. Dabei ist es zur Bildung einer kompakten, platzsparenden Baueinheit vorteilhaft, den Steuerhebel und die Sperrklinke auf einer Seite des lehnenfesten Beschlagteiles zu lagern, während der Steuerhebel mit einem Zapfen ein um die Lagerachse des Steuerhebels gekrümmtes Langloch im lehnenfesten Beschlagteil durchdringt, wobei der Zapfen auf der anderen Seite des lehnenfesten Beschlagteiles vom Langloch einer Zuglasche übergriffen ist, die mit dem in Löserichtung federbelasteten Klinkenhebel drehgelenkig verbunden ist. Dabei ist der Betätigungsring vorteilhaft als Kreisring ausgebildet, der an seinem Außenumfang einerseits einen Vorsprung zum Angriff einer Mitnehmernase des Klinkenhebels und andererseits eine Anschlußstelle für ein mit einem Sperrhebel der Längslagenstelleinrichtung verbindbares Übertragungsglied aufweist. Dieses Übertragungsglied mag in bekannter Weise ein Bowdenzug sein, dessen Mantelhülse in üblicherweise an der mit dem Sitzteil festen Beschlagteil fest verbundenen Sitzteillasche abgestützt sein kann.

Um aus Sicherheitsgründen die Lösung der Längslagenstelleinrichtung erst dann vorzunehmen, wenn der lehnenfeste Beschlagteil von der verstellbaren Scheibe gelöst wurde und um ein ungewolltes Auslösen der Verriegelung der Längslagenstelleinrichtung durch Verschwenken der Rückenlehne im Crashfall zu vermeiden, ist das Langloch in der Zuglasche des Klinkenhebels so bemessen, dass erst nach Aushebung der Sperrklinke aus dem Zahnsegment der verstellbaren Scheibe und einem bestimmten Leerweg der Klinkenhebel mit seiner Mitnehmernase in den Kreisumfangsbereich des Auslösehebels zur Erfassung seines Vorsprunges verschwenkt. Dabei sind vorteilhaft zur sicheren Eingriffshaltung von Vorsprung und Mitnehmernase sowohl der Vorsprung des Betätigungsrings als auch die Mitnehmernase des Klinkenhebels an ihren in Verbindungslage aneinander anliegenden Flächen hinterschnitten, während die gegenüberliegenden Flächen als Übergleitschrägen ausgebildet sind. Dadurch ist die Rückschwenkbewegung des lehnenfesten Beschlagteiles selbst dann möglich, wenn die Mitnehmernase den Vorsprung des Auslösehebels bereits ohne dessen Mitnahme überfahren hatte und infolge Fehlbedienung der Klinkenhebel während der Rückschwenkbewegung an den Umfang des Auslösehebels angedrückt ist. Zwecks Begrenzung der Öffnungslage des Klinkenhebels ist dessen Löselage vorteilhaft durch einen Anschlag am lehnenfesten Beschlagteil begrenzt.

Die zuvor beschriebenen Bauteile reichen aus, wenn sichergestellt werden kann, dass die Rückenlehne bei ihrer Vorschwenkung unter einem genügend großen Winkel nach vorne geklappt ist, so dass ihr Schwerpunkt vor der Schwenkachsenmitte liegt und somit eine selbsttätige, schwerkraftbedingte Rückstellung der Rückenlehne nicht möglich ist. Falls sich das Fahrzeug auf einem bergauf führenden Untergrund befindet, die Seilkraft aus der Rückstellfeder der Längslageneinstellrichtung wirksam wird oder aber die Polsterung ein weites Verschwenken der Rückenlehne einschränkt, kann durch eine zusätzliche Einrichtung die Rückenlehne auch in einer etwas steileren Vorklapplage zusätzlich arretiert werden. Zu diesem Zweck ist der Zapfen des Steuerhebels vom Langloch einer weiteren Koppellasche übergriffen, die an einem am lehnenfesten Beschlagteil gelagerten und in Sperrrichtung federbelasteten Haltehebel angelenkt ist, der an einem die Vorschwenklage der Rückenlehne sichernden, dem sitzteilfesten Beschlagteil zugeordneten Halteglied festlegbar ist. Dabei mag das Halteglied vorteilhaft als Haken einer den Sitzteil festen Beschlagteil mit der Laufschiene einer Schienenanordnung verbindenden Sitzteillasche ausgebildet sein. Auch bei dieser Koppellasche des Haltehebels ist das Langloch so bemessen, dass während der Aushebung der Sperrklinke aus dem Zahnsegment der verstellbaren Scheibe der Zapfen des Steuerhebels über die Koppellasche den Haltehebel in eine den Haken hintergreifende Öffnungslage verschwenkt. Dabei ist der Sperrweg des Haltehebels vorteilhaft durch einen Anschlag am lehnenfesten Beschlagteil begrenzt.

Was die Einstellung der Neigungslage der Rückenlehne gegenüber dem Sitzteil angeht, so kann diese Einstellung durch verschiedenartige Ver- und Feststelleinrichtungen erfolgen. Im vorliegenden Fall ist ein als Taumelgetriebe bezeichnetes einfaches Planetengetriebe eingesetzt, wie es beispielsweise aus der DE 44 36 101 A 1 zu entnehmen ist. Mit der über ein Exzenterglied gegenüber dem sitzteilfesten Beschlagteil verstellbaren Scheibe ist mittels der Sperrklinke und einem Anschlag der lehnenfeste Beschlagteil in Gebrauchslage fest mit der verstellbaren Scheibe verbunden, so dass bei Betätigung der Exzenterglieder durch einen Mitnehmer ein Hohlzahnrad auf einem Stirnrad des sitzteilfesten Beschlagteiles abwälzt, wodurch sich die verstellbare Scheibe zusammen mit dem lehnenfesten Beschlagteil gegenüber dem sitzteilfesten Beschlagteil verstellt.

Die Erfindung ist in einem Ausführungsbeispiel auf der Zeichnung dargestellt und wird nachfolgend näher erläutert. Es zeigen:
- Fig. 1: den mit einer Freischwenkeinrichtung ausgestatteten Neigungseinstellbeschlag in einer Seitenansicht, in welcher die auf einer Seite des lehnenfesten Beschlagteiles angeordnete Sperrklinke mit dem diese betätigenden Steuerhebel dargestellt ist,
- Fig. 2: den aus Fig. 1 ersichtlichen Neigungseinstellbeschlag in einer Seitenansicht auf die andere Längsseite gesehen, auf der sich der Klinkenhebel und der Auslösehebel für die Längslagenstelleinrichtung dargestellt ist,
- Fig. 3: den Neigungseinstellbeschlag in einem Längsschnitt nach der Linie III - III von Fig. 1,
- Fig. 4: die Zuordnung von Haltehebel und Koppellasche zum Steuerhebel in einem Schnitt nach der Linie IV - IV von Fig. 1,
- Fig. 5: die Anordnung von Steuerhebel, Sperrklinke und Klinkenhebel am lehnenfesten Beschlagteil in einem Schnitt nach der Linie V - V von Fig. 1,
- Fig. 6: die Zuordnung von Klinkenhebel und Zuglasche zum Steuerhebel in einem Schnitt nach der Linie VI - VI von Fig. 1,
- Fig. 7: den analog in Fig. 2 dargestellten Neigungseinstellbeschlag, bei welchem die Sperrklinke aus der Verzahnung der verstellbaren Scheibe ausgehoben ist, während der Klinkenhebel in seine Funktionslage und der Haltehebel in seine Öffnungslage geschwenkt sind.

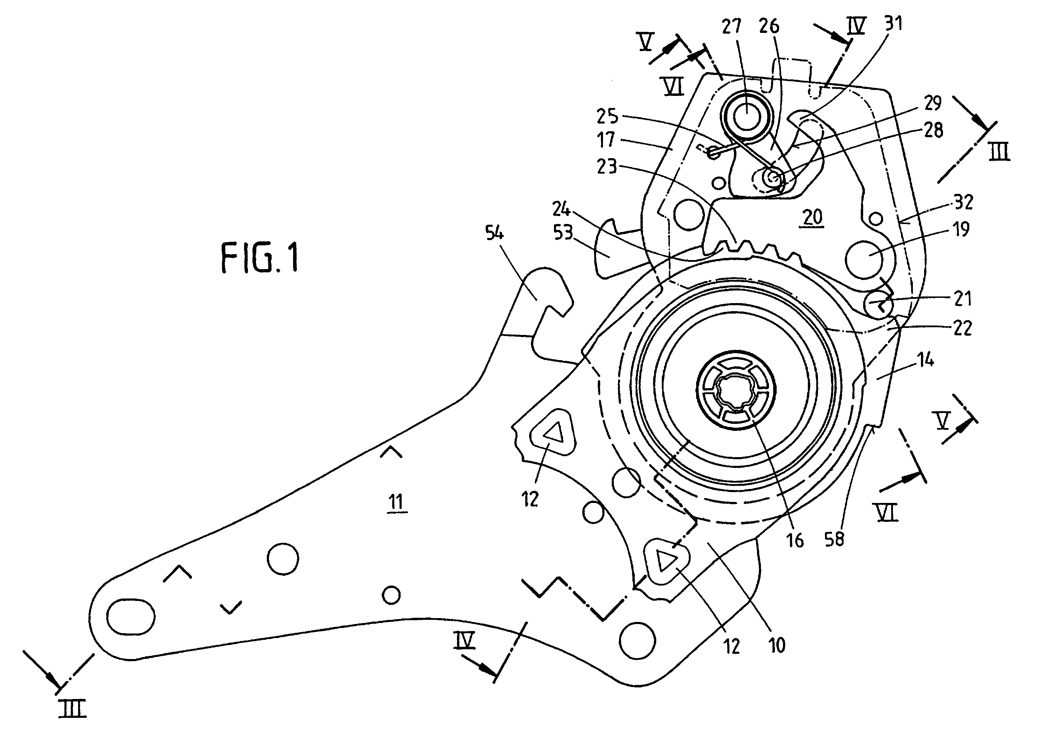

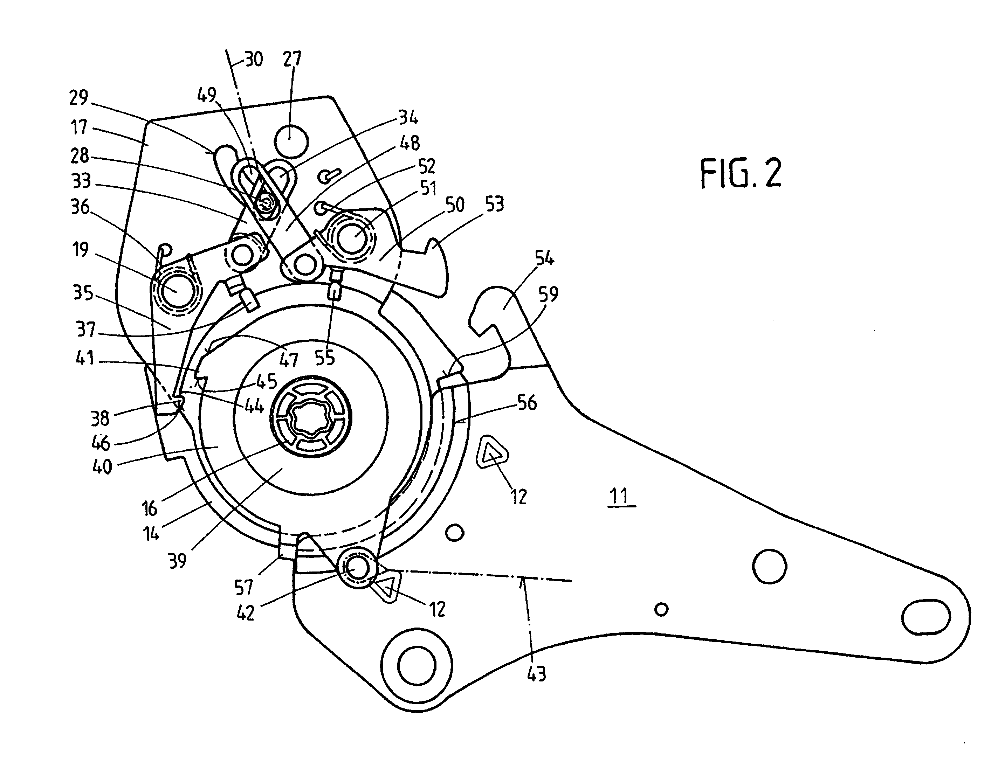

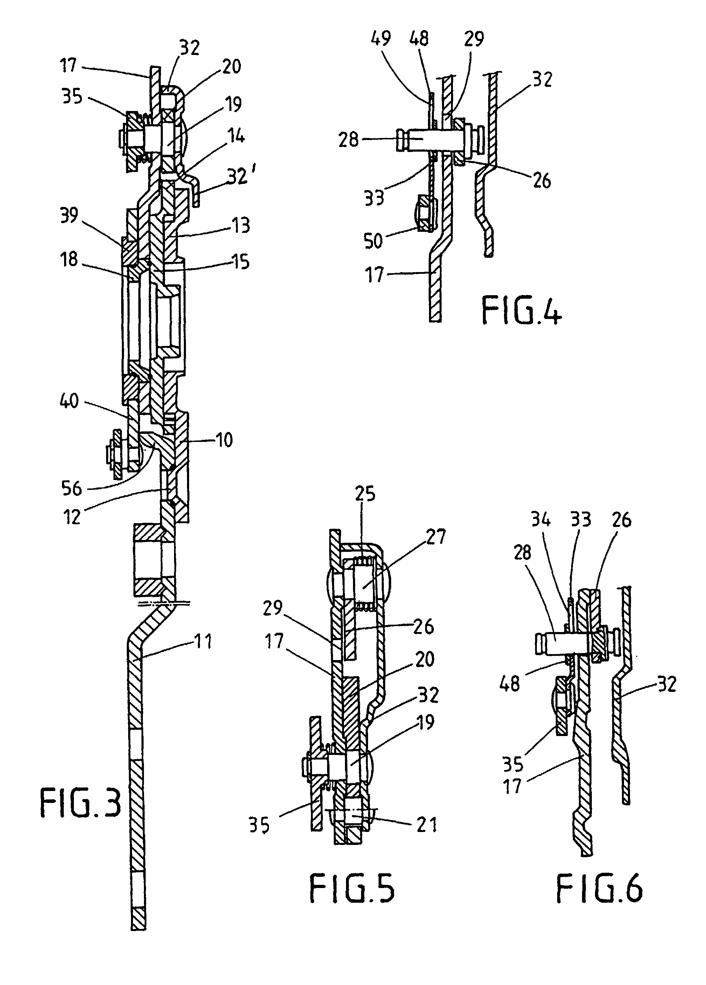

Bei dem aus den Figuren ersichtlichen Ausführungsbeispiel ist der Neigungseinstellbeschlag mit seinem sitzteilfesten Beschlagteil 10 an einer Sitzteillasche 11, bespielsweise durch Verschweißung von Facetten 12 festgelegt. Dabei weist der sitzteilfeste Beschlagteil 10 ein durch einen Feinstanzvorgang ausgeprägtes Stirnzahnrand 13 auf, das mit seiner Außenverzahnung in die Innenverzahnung einer einstellbaren Scheibe 14 eingreift, wobei auch die Innenverzahnung dieser einstellbaren Scheibe durch Ausprägen eines Scheibenmittelteiles 15 gebildet ist (Fig. 3). In bekannter Weise ist der Fußkreis der Innenverzahnung der einstellbaren Scheibe 14 um weinigstens eine Zahnhöhe größer als der Kopfkreis der Außenverzahnung des Stirnzahnrades 13. Dabei werden die Verzahnungen des Stirnzahnrades 13 und der einstellbaren Scheibe 14 bei dem dargestellten Ausführungsbeispiel durch eine nicht dargestellte Exzenteranordnung im Eingriff gehalten, wie sie beispielsweise aus der DE 44 36 101 A 1 ersichtlich ist. Auf diese Weise läßt sich die Lage der einstellbaren Scheibe 14 gegenüber dem sitzteilfesten Beschlagteil 10 mittels des in den Fig. 1 und 2 angedeuteten Mitnehmers 16 verstellen.

An der zuvor genannten einstellbaren Scheibe 14 ist ein lehnenfester Beschlag 17 auf einer am Scheibenmittelteil 15, beispielsweise durch Verschweißen, befestigten Achsscheibe 18 drehbar gelagert (Fig. 3). Mittels einer auf dem am lehnenfesten Beschlag 17 festgelegten Achszapfen 19 gelagerten Sperrklinke 20 und einem am lehnenfesten Beschlagteil 17 angeordneten Anschlagbolzen 21 ist der lehnenfeste Beschlagteil 17 an der einstellbaren Scheibe 14 festlegbar, indem der Anschlagbolzen 21 an einer Anschlagnase 22 der einstellbaren Scheibe 14 zur Anlage kommt, und andererseits die Sperrklinke 20 mit ihrer Verzahnung 23 in ein Zahnsegment 24 der einstellbaren Scheibe 14 einrasten kann. In dieser aus Fig. 1 ersichtlichen Sperrlage zwischen der einstellbaren Scheibe 14 und dem lehnenfesten Beschlagteil 17 ist die Eingriffslage der Sperrklinke 20 in das Zahnsegment 24 der einstellbaren Scheibe 14 durch einen - im Sperrsinn mittels einer Schenkelfeder 25 beaufschlagten - Steuerhebel 26 gesichert. Dieser Steuerhebel 26 ist um einen am lehnenfesten Beschlagteil 17 festgelegten Achsbolzen 27 schwenkbar. Außerdem ist am Steuerhebel 26 ein Zapfen 28 befestigt, der ein um den Achsbolzen 27 gekrümmtes Langloch 29 im lehnenfesten Beschlagteil 17 durchgreift und an den ein manuell betätigbares Zugglied 30, beispielsweise in Form eines Bowdenzuges, angeschlossen ist, mit welchem der Steuerhebel 26 gegen die Wirkung der Schenkelfeder 25 entgegen dem Uhrzeigersinn verschwenkbar ist, wodurch einerseits seine Sicherungslage an der Sperrklinke 20 aufhebbar und andererseits die Sperrklinke 20 über einen Mitnehmerfinger 31 aus dem Zahnsegment 24 der einstellbaren Scheibe 14 aushebbar ist. Dadurch ist der lehnenfeste Beschlagteil 17 zusammen mit der daran beispielsweise durch Verschweißen festgelegten Rückenlehne gegenüber der Scheibe 14 vorschwenkbar.

Die auf einer Seite des lehnenfesten Beschlagteiles 17 angeordneten Bauteile in Form der Sperrklinke 20, des Steuerhebels 26 sowie der Schenkelfeder 25 sind durch eine in Fig. 1 in strichpunktierten Linien angedeutete Abdeckhaube 32 überdeckt. Diese Abdeckhaube 32 ist durch den Achszapfen 19, den Lagerzapfen 51 und den Achsbolzen 27 am lehnenfesten Beschlagteil 17 festgelegt und übergreift mit einem ausgebogenen Randteil 32' den sitzteilfesten Beschlagteil 10 zur Sicherung der axialen Verbindungslage der Beschlagteile 10 und 17 sowie der dazwischen angeordneten einstellbaren Scheibe 14 (Fig. 3).

Der das gekrümmte Langloch 29 im lehnenfesten Beschlagteil 17 durchgreifende Zapfen 28 ist auf der anderen Seite des lehnenfesten Beschlagteiles 17 vom Langloch 34 einer Zuglasche 33 übergriffen, die an ihrem anderen Ende drehgelenkig mit einem Klinkenhebel 35 verbunden ist, der - wie die Sperrklinke 20 - ebenfalls auf dem Achszapfen 19 des lehnenfesten Beschlagteiles 17 schwenkbar gelagert ist. Dabei dient eine den Achszapfen 19 umrundende Schenkelfeder 36 der Beaufschlagung des Klinkenhebels 35 im Lösesinne, d.h. gemäß Fig. 2 im Sinne einer Verschwenkung im Uhrzeigerdrehsinn. Dabei wird der Löseweg des Klinkenhebels 35 durch einen Anschlag 37 am lehnenfesten Gelenkteil 17 begrenzt. Am freien Ende des Klinkenhebels 35 befindet sich eine Mitnehmernase 38, deren Zweck später erläutert wird.

Wie insbesondere der Fig. 3 entnommen werden kann, ist mit der Achsscheibe 18 ein Kragenring 39 beispielsweise durch Schneidnietung fest verbunden, der somit auch über die Achsscheibe 18 fest mit der einstellbaren Scheibe 14 verbunden ist. Der Kragenring 39 lagert einen Betätigungsring 40, der in gleicher axialer Ebene, wie der Klinkenhebel 35 angeordnet ist. Dieser Auslösehebel weist bei dem dargestellten Ausführungsbeispiel eine Kreisringform auf, könnte allerdings auch anders gestaltet sein. In seinem dem Klinkenhebel 35 zugekehrten Bereich weist der Auslösehebel 40 an seinem Außenumfang einen Vorsprung 41 auf, der in Umfangsrichtung des kreisförmigen Auslösehebels 40 mit etwas Abstand oberhalb der Mitnehmernase 38 angeordnet ist. Im unteren Bereich weist der Auslösehebel 40 eine über seinen Außenumfang vorragende Anschlußstelle 42 auf, an welche ebenfalls ein Übertragungsglied 43 angeschlossen ist, das ebenfalls als Bowdenzug ausgebildet sein kann und die Verbindung mit einem nicht dargestellten Sperrhebel einer ebenfalls nicht dargestellten Längslagenstelleinrichtung herstellt. Diese Längslagenstelleinrichtung mag eine Verriegelungseinrichtung umfassen, wie sie beispielsweise aus der DE 196 13 432 A 1 ersichtlich ist und mit deren Hilfe die Oberschiene an der Unterschiene aufhebbar festgelegt ist, wobei mit der Oberschiene die Sitzteillasche 11 befestigt sein mag.

Die in Verbindungslage von Klinkenhebel 35 und Auslösehebel 40 aneinander anliegenden Flächen 44 und 45 der Mitnehmernase 38 bzw. des Vorsprunges 41 sind zur Vermeidung des Abrutschens leicht hinterschnitten, während die gegenüberliegenden Flächen an der Mitnehmernase 38 einerseits und am Vorsprung 41 andererseits Übergleitschrägen 46 bzw. 47 bilden.

Bei allen Ausführungsformen, bei denen sich die Rückenlehne soweit nach vorn schwenken läßt, dass ihr Schwerpunkt genügend weit über das Zentrum des Mitnehmers 16 hinaus nach vorn verlagert wird, genügen die zuvor beschriebenen Bauteile für das Freischwenken der Rückenlehne in Verbindung mit einer Vorschiebebewegung des gesamten Sitzes. Zur Vorschwenkung der Rückenlehne aus ihrer in den Fig. 1 und 2 dargestellten Verriegelungsposition wird über das Zugglied 30 der Zapfen 28 nach oben bewegt, wodurch auch die Verriegelungslage zwischen Steuerhebel 26 und der Sperrklinke 20 oberhalb ihrer Verzahnung 23 aufgehoben wird. Nach einem bestimmten Verschwenkweg des Zapfens 28 im kreisförmig gekrümmten Langloch 29 des lehnenfesten Beschlagteiles 17 hebt dieser Zapfen 28 mittels des Mitnehmerfingers 31 die Sperrklinke 20 aus dem Zahnsegment 24 der einstellbaren Scheibe 14 aus. Dabei ist das Langloch 34 in der Zuglasche 33 so bemessen, dass der Zapfen 28 am oberen Ende des Langloches 34 zur Anlage kommt und erst kurz vorher dann den Klinkenhebel 35 gegen die Wirkung der Schenkelfeder 36 im Uhrzeigerdrehsinn verschwenkt. Diese Schwenkbewegung des Klinkenhebels 35 ist beendet, wenn der Zapfen 28 am oberen Ende des Langloches 29 angelangt ist bzw. wenn die Mitnehmernase 38 des Klinkenhebels 35 auf dem Kreisumfang des Auslösehebels 40 anliegt. Wird nun bei dieser Endlage des Zapfens 28 die Rückenlehne nach vorn geschwenkt, so gelangt nach kurzer Schwenkbewegung der Rückenlehne die Mitnehmernase 38 mit ihrer Fläche 44 in Kontakt mit der Fläche 45 des Vorsprunges 41 am Auslösehebel 40 und nimmt diesen ebenfalls im Uhrzeigerdrehsinn mit, so dass auf das Übertragungsglied 43 eine Zugkraft ausgeübt wird, durch welche die zuvor erwähnte Längslagensperreinrichtung gelöst wird, so dass nach dem Vorschwenken der Rückenlehne der gesamte Sitz nach vorn geschoben werden kann. Die das Sperrglied der Längslagenstelleinrichtung beaufschlagende Feder sucht den Auslösehebel 40 durch das Übertragungsglied 43 immer in die aus Fig. 2 ersichtliche Ausgangslage zurückzuziehen.

Falls jedoch die Bedienungsperson das Zugglied 30 nur soweit bewegt, dass lediglich die Sperrklinke 20 aus ihrer Verbindungslage mit dem Zahnsegment 24 gelangt und der Zapfen 28 mit Abstand zum Ende des gekrümmten Langloches 29 bzw. gerade am Ende des Langloches 34 gehalten wird, ohne die Zuglasche 33 nach oben zu ziehen, so erfolgt auch keine Verschwenkung des Klinkenhebels 35, so dass dessen Mitnehmernase 38 über dem Vorsprung 41 an diesem vorbei gedreht werden kann, so dass lediglich eine Vorschwenkung der Rückenlehne erfolgt, nicht jedoch eine Auslösung der Sperrstellung der Längslagenstelleinrichtung. In diesem Fall kann der Sitz nicht vorgeschoben werden.

Die Rückenlehne läßt sich bei beliebiger Sitzstellung wieder in ihre ursprüngliche Neigungslage zurückschwenken, wobei sich im Falle einer vorherigen Vorschiebebewegung des Sitzes die Längslagenstelleinrichtung selbsttätig wieder in ihre Verriegelungsstellung überführt. Schon bei einer geringen Zurückschiebebewegung des Sitzes ist die Verriegelung der Längslagenstelleinrichtung wieder aktiviert, so dass, selbst dann, wenn beim Zurückschwenken der Lehne die zuvor festgelegte Ausgangsstellung beispielsweise wegen eines Gegenstandes hinter dem Sitz nicht erreicht wird und somit eine Verriegelung des lehnenfesten Beschlagteiles 17 mit der einstellbaren Scheibe 14 nicht erzielt wird, erfolgt aus den oben geschilderten Gründen keine Entriegelung der Längslagenstelleinrichtung selbst bei crashfallbedingtem Vorschwenken der Rückenlehne. Falls die Bedienungsperson nach dem Zurückschwenken der Rückenlehne und gleichzeitigem Zurückschieben des gesamten Sitzes die zuvor eingestellte Sitzlängslagenposition nicht exakt erreicht, ist eine Nachjustierung der Längslagenstelleinrichtung erforderlich, indem eine für die Längsverschiebung vorgesehene Betätigungseinrichtung bedient wird.

Wenn jedoch aus dem oben bereits angesprochenen Gründen die Vorschwenkung der Rückenlehne nicht weiter möglich ist als in eine vorgegebene, etwa steile Stellung, aus der Sie leicht in ihre vorbestimmte rückwärtige Neigungslage zurückkehren könnte, so ist am vorliegenden Neigungseinstellbeschlag eine Zusatzeinrichtung vorgesehen, die am besten aus der Fig. 2 entnommen werden kann und die nachfolgend beschrieben ist. In diesem Fall ist der Zapfen 28 des Steuerhebels 26 außer von der Zuglasche 33 von einem Langloch 49 einer Koppellasche 48 übergriffen, die mit einem Haltehebel 50 drehgelenkig verbunden ist, der seinerseits auf einem am lehnenfesten Beschlagteil 17 gehalterten Lagerzapfen 51 schwenkbar angeordnet ist. Dieser Haltehebel 50 ist ebenfalls von einer Schenkelfeder 52 im Sperrsinne federbelastet, und weist an seinem freien Ende einen Haltefinger 53 auf. Mit diesem Haltefinger 53 kann der Haltehebel 50 hinter ein als Haken ausgebildetes Halteglied 54 fassen, das bei dem dargestellten Ausführungsbeispiel an der Sitzteillasche 11 derart angeformt ist, dass der Haken 54 und der Haltehebel 50 in axialer Richtung in ein und derselben Ebene liegen. In der aus Fig. 2 ersichtlichen Verriegelungslage zwischen dem lehnenfesten Beschlagteil 17 und der einstellbaren Scheibe 14 ist die Schließlage des Haltehebels 50 ebenfalls durch einen Anschlag 55 am lehnenfesten Beschlagteil 17 begrenzt.

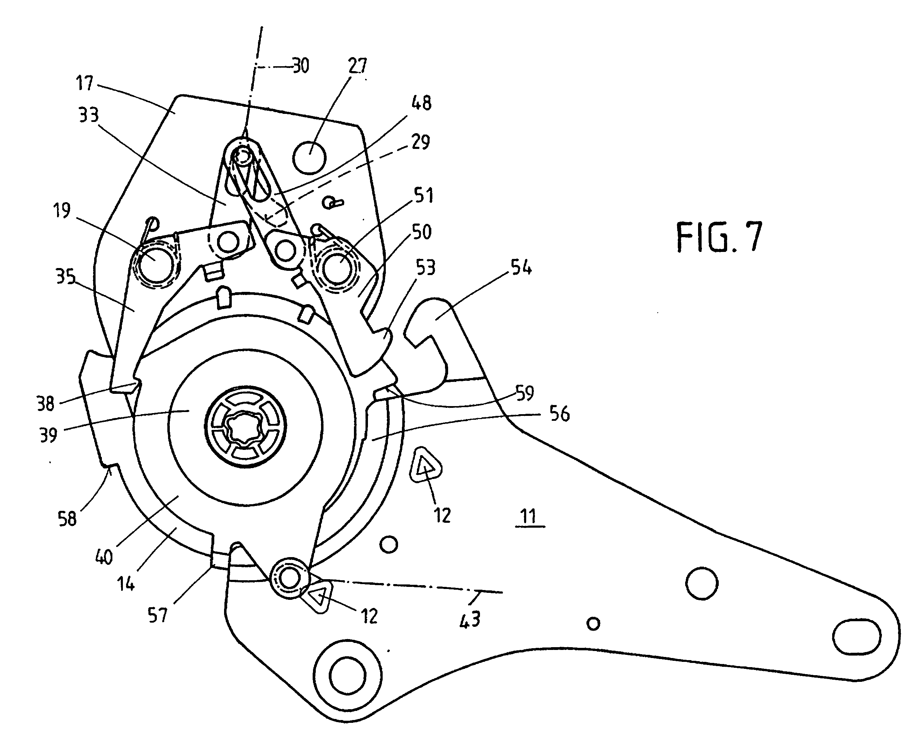

Wenn nun ein mit der letztgenannten Haltevorrichtung versehener Neigungseinstellbeschlag die Vorschwenkung der Rückenlehne und das Vorschieben des gesamten Sitzes ermöglichen soll, so ist über das Zugglied 30 der Zapfen 28 des Steuerhebels 26 in die aus Fig. 7 ersichtliche Position zu bringen. Dabei wird außer der zuvor beschriebenen Funktion von Klinkenhebel 35 und Auslösehebel 40 auch die Koppellasche 48 nach oben gezogen, wodurch der Haltehebel 50 entgegen der Rückstellkraft der Schenkelfeder 52 im Uhrzeigersinn in eine Öffnungslage verschwenkt. Diese Stellung der Bauteile zueinander ist aus Fig. 7 zu entnehmen. Wenn nun ausgehend von dieser in Fig. 7 dargestellten Lage die Rückenlehne mit ihrem lehnenfesten Beschlagteil 17 etwas weiter nach vorn geschwenkt wird, so gelangt der Haltefinger 53 hinter den Haken 54 und hält die Lehne in der etwas vorgeklappten Lage fest, sobald die Bedienungsperson die Handhabe an der Rückenlehne zur Betätigung des Zuggliedes 30 losläßt. Dabei wurden zuvor bereits die oben beschriebenen Funktionslagen von Klinkenhebel 35 und Betätigungsring 40 erreicht, so dass auch der gesamte Sitz in eine vorgeschobene Lage überführt werden kann.

Der Vollständigkeit halber ist noch zu erwähnen, dass die Sitzteillasche 11 im Anschlußbereich an den sitzteilfesten Beschlagteil 10 einen derartig ausgeprägten Segmentteil 56 aufweist, dass auch im unteren Beschlagbereich die einstellbare Scheibe 14 mit dem sitzteilfesten Beschlagteil 10 in axialer Richtung festgelegt werden kann. Außerdem kann der Auslösehebel 40 einen Anschlag 57 aufweisen, durch den die Rückstellbewegung des Auslösehebels 40 zum Einfallen des nicht dargestellten Sperrhebels der ebenfalls nicht dargestellten Längslagenstelleinrichtung begrenzt wird. Außerdem kann die Stellbewegung für die Neigungseinstellung der Rücklehne durch an der einstellbaren Scheibe 14 angeordnete Anschläge 58 und 59 sowohl nach vorn als auch nach hinten begrenzt werden. Diese Anschläge 58 und 59 können an der Sitzteillasche 11 jeweils anschlagen.

Wie bereits erwähnt, gibt die dargestellte und vorbeschriebene Ausführungsform den Erfindungsgegenstand nur beispielsweise wieder, der keinesfalls allein darauf beschränkt ist. Es sind vielmehr noch weitere Änderungen und Ausgestaltungen des Erfindungsgegenstandes denkbar. Darüberhinaus sind alle aus den Zeichnungen und der Beschreibung ersichtlichen Merkmale erfindungswesentlich, auch wenn sie in den Ansprüchen nicht ausdrücklich beansprucht worden sind.

### Bezugszeichenliste:

- 10: Beschlagteil, sitzteilfest
- 11: Sitzteillasche
- 12: Facette
- 13: Stirnzahnrad
- 14: Scheibe, einstellbar
- 15: Scheibenmittelteil
- 16: Mitnehmer
- 17: Beschlagteil, lehnenfest
- 18: Achsscheibe
- 19: Achszapfen
- 20: Sperrklinke
- 21: Anschlagbolzen
- 22: Anschlagnase
- 23: Verzahnung
- 24: Zahnsegment, an 14
- 25: Schenkelfeder
- 26: Steuerhebel
- 27: Achsbolzen
- 28: Zapfen, an 26
- 29: Langloch, in 17
- 30: Zugglied
- 31: Mitnehmerfinger, an 20
- 32: Abdeckhaube
- 32': Randbereich
- 33: Zuglasche
- 34: Langloch , von 33
- 35: Klinkenhebel
- 36: Schenkelfeder
- 37: Anschlag
- 38: Mitnehmernase
- 39: Kragenring
- 40: Betätigungsring
- 41: Vorsprung
- 42: Anschlußstelle, an 40
- 43: Übertragungsglied
- 44: Fläche, an 38
- 45: Fläche, an 41
- 46: Übergleitschräge
- 47: Übergleitschräge
- 48: Koppellasche
- 49: Langloch
- 50: Haltehebel
- 51: Lagerzapfen
- 52: Schenkelfeder
- 53: Haltefinger
- 54: Halteglied/Haken
- 55: Anschlag
- 56: Segmentteil, an 10
- 57: Anschlag
- 58: Anschlag
- 59: Anschlag

## Patentansprüche

1. Neigungseinstellbeschlag mit Freischwenkeinrichtung für Rückenlehnen von Sitzen, insbesondere Kraftfahrzeugsitzen, bei dem ein lehnenfester, einstellbarer Beschlagteil (17) über eine Ver- und Feststelleinrichtung mit einem sitzteilfesten Beschlagteil (10) verbunden ist, wobei die Ver- und Feststelleinrichtung eine entsprechend der gewünschten Lehnenneigung mittels einer Stellwelle verstellbare Scheibe (14) umfaßt, die zur Bildung der Freischwenkeinrichtung an ihrem Außenumfang ein Zahnsegment (24) aufweist, in welches eine am lehnenfesten Beschlagteil (17) gelagerte Sperrklinke (20) eingreift, die mit einem im Freigabesinn betätigbaren und im Sperrsinn selbstrückstellenden Steuerhebel (26) im Eingriff ist,
**dadurch gekennzeichnet,**
**dass** der Steuerhebel (26) mit einem Klinkenhebel (35) gekuppelt ist, der beim Freischwenken des lehnenfesten Beschlagteiles (17) an einem an der einstellbaren Scheibe (14) gelagerten Betätigungsring (40) im Sinne der Entriegelung einer zwischen Sitzteil und Fahrzeugboden angeordneten Längslagenstelleinrichtung angreift.

2. Neigungseinstellbeschlag nach Anspruch 1, **dadurch gekennzeichnet, dass** Steuerhebel (26) und Sperrklinke (20) auf einer Seite des lehnenfesten Beschlagteiles (17) gelagert sind, und der Steuerhebel (26) mit einem Zapfen (28) ein um die Lagerachse (27) des Steuerhebels (26) gekrümmtes Langloch (29) im lehnenfesten Beschlagteil (17) durchdringt, wobei der Zapfen (28) auf der anderen Seite des lehnenfesten Beschlagteiles (17) vom Langloch (34) einer Zuglasche (33) übergriffen ist, die mit dem in Löserichtung federbelasteten Klinkenhebel (35) drehgelenkig verbunden ist.

3. Neigungseinstellbeschlag nach Anspruch 1 oder 2, **dadurch gekennzeichnet, dass** der Auslösehebel (40) als Kreisring ausgebildet ist, der an seinem Außenumfang einerseits einen Vorsprung (41) zum Angriff einer Mitnehmernase (38) des Klinkenhebels (35) und andererseits eine Anschlußstelle (42) für ein mit einem Sperrhebel der Längslagenstelleinrichtung verbindbares Übertragungsglied (43) aufweist.

4. Neigungseinstellbeschlag nach einem der vorhergehenden Ansprüche, **dadurch gekennzeichnet, dass** das Langloch (34) in der Zuglasche (33) des Klinkenhebels (35) so bemessen ist, dass erst bei Aushebung der Sperrklinke (20) aus dem Zahnsegment (24) der einstellbaren Scheibe (14) der Klinkenhebel (35) mit einer Mitnehmernase (38) in den Kreisumfangsbereich des Betätigungsring (40) zur Erfassung seines Vorsprunges (41) verschwenkt.

5. Neigungseinstellbeschlag nach einem der vorhergehenden Ansprüche, **dadurch gekennzeichnet, dass** sowohl der Vorsprung (41) des Betätigungsrings (40) als auch die Mitnehmernase (38) des Klinkenhebels (35) an ihren in Verbindungslage aneinander anliegenden Flächen (44,45) hinterschnitten sind, während die gegenüberliegenden Flächen als Übergleitschrägen (46,47) ausgebildet sind.

6. Neigungseinstellbeschlag nach einem der vorhergehenden Ansprüche, **dadurch gekennzeichnet, dass** die Löselage des Klinkenhebels (35) durch einen Anschlag (37) am lehnenfesten Beschlagteil (17) begrenzt ist.

7. Neigungseinstellbeschlag nach einem der vorhergehenden Ansprüche, **dadurch gekennzeichnet, dass** der Zapfen (28) des Steuerhebels (26) vom Langloch (49) einer weiteren Koppellasche (48) übergriffen ist, die an einem am lehnenfesten Beschlagteil (17) gelagerten und in Sperrichtung federbelasteten Haltehebel (50) angelenkt ist, der an einem die Vorschwenklage der Rückenlehne sichernden, dem sitzteilfesten Beschlagteil (10) zugeordneten Halteglied (54) festlegbar ist.

8. Neigungseinstellbeschlag nach Anspruch 7, **dadurch gekennzeichnet, dass** das Halteglied (54) als Haken einer den sitzteilfesten Beschlagteil (10) mit der Laufschiene einer Schienenanordnung verbindenden Sitzteillasche (11) ausgebildet ist.

9. Neigungseinstellbeschlag nach Anspruch 7, **dadurch gekennzeichnet, dass** das Langloch (49) in der Koppellasche (48) des Haltehebels (50) so bemessen ist, dass erst bei Aushebung der Sperrklinke (20) aus dem Zahnsegment (24) der verstellbaren Scheibe (14) der Zapfen (28) über die Koppellasche (48) den Haltehebel (50) in eine den Haken (54) hintergreifende Öffnungslage verschwenkt.

10. Neigungseinstellbeschlag nach einem der Ansprüche 7 bis 9, **dadurch gekennzeichnet, dass** der Sperrweg des Haltehebels (50) durch einen Anschlag (55) am lehnenfesten Beschlagteil (17) begrenzt ist.

## Claims

1. Tilt adjustment fitting with freely pivoting device for backrests of seats, in particular motor vehicle seats, in which an adjustable fitting part (17), which is fixed to the backrest, is connected via a shifting and arresting device to a fitting part (10), which is fixed to the seating part, wherein the shifting and arresting device comprises a disc (14), which can be shifted according to the desired backrest tilt by means of a setting shaft and which, to form the freely pivoting device, comprises at its outer circumference a toothed segment (24) in which a pawl (20) mounted at the fitting part (17) fixed to the backrest engages, which pawl is engaged with a control lever (26) which can be actuated in the release direction and is self-resetting in the locking direction,
**characterised in**
**that** the control lever (26) is coupled to a ratchet lever (35) which, upon freely pivoting the fitting part (17) fixed to the backrest, acts on an actuating ring (40) mounted at the adjustable disc (14) for the purpose of unlocking a longitudinal position setting device disposed between the seating part and the vehicle floor.

2. Tilt adjustment fitting according to Claim 1, **characterised in that** the control lever (26) and the pawl (20) are mounted on one side of the fitting part (17) fixed to the backrest, and the control lever (26) passes with a pin (28) through an elongate hole (29), which is curved about the pivot (27) of the control lever (26) in the fitting part (17) fixed to the backrest, wherein the elongate hole (34) of a pull strap (33) engages over the pin (28) on the other side of the fitting part (17) fixed to the backrest, which strap is connected in a pivoting fashion to the ratchet lever (35), which is spring-loaded in the release direction.

3. Tilt adjustment fitting according to Claim 1 or 2, **characterised in that** the release lever (40) is formed as a circular ring which comprises at its outer circumference on one side a projection (41) for the action of a driver lug (38) of the ratchet lever (35) and on the other a connection point (42) for a transmission member (43) which can be connected to a locking lever of the longitudinal position setting device.

4. Tilt adjustment fitting according to any one of the preceding Claims, **characterised in that** the elongate hole (34) in the pull strap (33) of the ratchet lever (35) is dimensioned such that it is only when the pawl (20) is lifted out of the toothed segment (24) of the adjustable disc (14) that the ratchet lever (35) pivots with a driver lug (38) into the circular circumferential region of the actuating ring (40) to engage the latter's projection (41).

5. Tilt adjustment fitting according to any one of the preceding Claims, **characterised in that** both the projection (41) of the actuating ring (40) and the driver lug (38) of the ratchet lever (35) are undercut at their faces (44, 45) which adjoin in the connection position, while the opposite faces are formed as slide-over faces (46, 47).

6. Tilt adjustment fitting according to any one of the preceding Claims, **characterised in that** the release position of the ratchet lever (35) is defined by a stop (37) at the fitting part (17) fixed to the backrest.

7. Tilt adjustment fitting according to any one of the preceding Claims, **characterised in that** the elongate hole (49) of a further coupling strap (48) engages over the pin (28) of the control lever (26), which strap is articulated to a retaining lever (50) which is mounted at the fitting part (17) fixed to the backrest, spring-loaded in the locking direction and can be fastened to a retaining member (54) which secures the forward pivoted position of the backrest and is associated with the fitting part (10) fixed to the seating part.

8. Tilt adjustment fitting according to Claim 7, **characterised in that** the retaining member (54) is formed as a hook of a seating part strap (11) which connects the fitting part (10) fixed to the seating part to the sliding rail of a rail arrangement.

9. Tilt adjustment fitting according to Claim 7, **characterised in that** the elongate hole (49) in the coupling strap (48) of the retaining lever (50) is dimensioned such that it is only when the pawl (20) is lifted out of the toothed segment (24) of the shiftable disc (14) that the pin (28) pivots the retaining lever (50) via the coupling strap (48) into an open position engaging behind the hook (54).

10. Tilt adjustment fitting according to any one of Claims 7 to 9, **characterised in that** the locking travel of the retaining lever (50) is limited by a stop (55) at the fitting part (17) fixed to the backrest.

## Revendications

1. Ferrure à réglage d'inclinaison, avec un dispositif de pivotement libre pour le dossier de sièges, en particulier de sièges de véhicules automobiles, ferrure dans laquelle une partie de ferrure (17) fixée au dossier, réglable, est reliée, par l'intermédiaire d'un dispositif de réglage et de blocage, à une partie de ferrure (10) fixée à la partie d'assise, le dispositif de réglage et de blocage comprenant un disque (14) manoeuvrable à l'aide d'un arbre de réglage, de manière correspondante à l'inclinaison souhaitée du dossier, disque présentant sur sa périphérie extérieure, pour former le dispositif de pivotement libre, un segment denté (24), dans lequel s'engrène un cliquet de blocage (20) monté sur la partie de ferrure (17) fixée au dossier, cliquet de blocage venant en prise avec un levier de commande (26), actionnable dans le sens de la libération et à rappel automatique dans le sens du blocage,
**caractérisée en ce que**
le levier de commande (26) est couplé à un levier à cliquet (35) qui, lors du pivotement libre de la partie de ferrure (17) fixée au dossier, agit sur un anneau d'actionnement (40) monté sur le disque réglable (14), dans le sens du déverrouillage d'un dispositif de réglage de position longitudinale, disposé entre la partie d'assise et le plancher du véhicule.

2. Ferrure à réglage d'inclinaison selon la revendication 1, **caractérisée par le fait que** le levier de commande (26) et le cliquet de blocage (20) sont montés sur un côté de la partie de ferrure (17) fixée au dossier, et le levier de commande (26) traversant par un tourillon (28) un trou allongé (29), incurvé autour de l'axe de palier (27) du levier de commande (26), le trou allongé étant ménagé dans la partie de ferrure (17) fixée au dossier, le tourillon (28) étant entouré, sur l'autre côté de la partie de ferrure (17) fixée au dossier, par le trou allongé (34) d'une patte de traction (33) reliée de façon articulée en rotation au levier à cliquet (35) chargé par un ressort dans le sens de la désolidarisation.

3. Ferrure à réglage d'inclinaison selon la revendication 1 ou 2, **caractérisée par le fait que** le levier de déclenchement (40) est réalisé sous la forme d'anneau de cercle, qui présente sur sa périphérie extérieure, d'une part une saillie (41) pour l'action d'un ergot d'entraînement (38) du levier à cliquet (35) et, d'autre part un point de raccordement (42) pour un organe de transmission (43) susceptible d'être relié à un levier de blocage du dispositif de réglage de position longitudinale

4. Ferrure à réglage d'inclinaison selon l'une des revendications précédentes, **caractérisée par le fait que** le trou allongé (34) ménagé dans la patte de traction (33) du levier à cliquet (35) est dimensionné de manière qu'ensuite, lors de la sortie du cliquet de blocage (20) hors du segment denté (24), le disque (14) réglable du levier à cliquet (35) pivote avec un ergot d'entraînement (38) dans la zone de périphérie circulaire de l'anneau d'actionnement (40) pour saisir sa saillie (41).

5. Ferrure à réglage d'inclinaison selon l'une des revendications précédentes, **caractérisée par le fait que**, tant la saillie (41) de l'anneau d'actionnement (40), qu'également l'ergot d'entraînement (38) du levier à cliquet (35), sur leurs surfaces (44, 45) appuyant l'une sur l'autre à leur position de liaison, sont dotés d'une contredépouille, tandis que les surfaces opposées sont conformées en pentes de franchissement (46, 47).

6. Ferrure à réglage d'inclinaison selon l'une des revendications précédentes, **caractérisée par le fait que** la position de désolidarisation du levier à cliquet (35) est limitée par une butée (37) sur la partie de ferrure (17) fixée au dossier.

7. Ferrure à réglage d'inclinaison selon l'une des revendications précédentes, **caractérisée par le fait que** le tourillon (28) du levier de commande (26) est entouré par le trou allongé (49) d'une autre patte de couplage (48) qui est montée sur une partie de ferrure (17) fixée au dossier et est articulée dans la direction de blocage du levier de maintien (50) chargé par un ressort, levier de maintien susceptible d'être fixé sur un organe de maintien (54), assurant la position pré-pivotée du dossier, associé à la partie de ferrure (10) fixée à la partie d'assise.

8. Ferrure à réglage d'inclinaison selon la revendication 7, **caractérisée par le fait que** l'organe de maintien (54) est réalisé sous la forme de crochet d'une patte de partie d'assise (11), reliant la partie de ferrure (10), fixée à la partie d'assise, à la glissière de défilement d'un agencement à rail.

9. Ferrure à réglage d'inclinaison selon la revendication 7, **caractérisée par le fait que** le trou allongé (49) dans la patte de couplage (48) du levier de maintien (50) est de dimensions faisant que, lors de l'enlèvement du cliquet de blocage (20) hors du segment denté (24) du disque réglable (14), le tourillon (28), par l'intermédiaire de la patte de couplage (48), fait pivoter le levier de maintien (50) en une position d'ouverture saisissant par l'arrière le crochet (54).

10. Ferrure à réglage d'inclinaison selon l'une des revendications 7 à 9, **caractérisée par le fait que** la course de blocage du levier de maintien (50) est limitée par une butée (55) prévue sur la partie de ferrure (17) fixée au dossier.
